# FASCICULE DE BREVET EUROPEEN

(11) **EP 2 263 894 B1**
(45) Date de publication et mention de la délivrance du brevet: **09.10.2013**
(21) Numéro de dépôt: 10164545.5
(22) Date de dépôt: 01.06.2010
(51) Int. Cl.: B60H 1/00, B60H 1/32

(54) **Système de gestion thermique comprenant une boucle de climatisation et un circuit de fluide caloporteur**
Wärmemanagmentsystem mit einem Klimaanlagenkreislauf und einem Kältemittelkreislauf
Thermal management system with an air conditioning cycle and a heating fluid cycle

(30) Priorité: 05.06.2009 FR 0902740
(43) Date de publication de la demande: 22.12.2010
(73) Titulaire: Valeo Systèmes Thermiques, 78321 Le Mesnil Saint Denis (FR)
(72) Inventeur: Neveu, Daniel, 91300, Massy (FR); Yahia, Mohamed, 75005, Paris (FR); Carton, Thomas, 78310, Maurepas (FR); Thuez, Jean-Luc, 78112, Fourqueux (FR)

(56) Documents cités:
- DE-A1-102006 042 788
- DE-U1-202008 000 319
- FR-A1- 2 864 148
- US-A1- 2005 039 878

## Description

L'invention se rapporte à un système de gestion thermique pour véhicule automobile comprenant une boucle de climatisation et un circuit de fluide caloporteur.

Pour des raisons environnementales, les véhicules automobiles électriques ou hybrides sont amenés à être développés. Ces véhicules se caractérisent par le remplacement total (véhicule électrique) ou partiel (véhicule hybride) du moteur thermique par un moteur électrique.

Ainsi, les véhicules électriques et hybrides ont les besoins suivants :
- gérer le déficit de chaleur lors des périodes hivernales du fait que le moteur électrique ne dégage pas assez de chaleur pour subvenir aux besoins de traitement thermique de l'air à l'intérieur de l'habitacle du véhicule.
- satisfaire le contrôle thermique de différents auxiliaires constitutifs du véhicule électrique ou hybrides tels que les batteries électriques, le système de freinage, l'air de l'habitacle, le système de propulsion du véhicule. Ce contrôle thermique doit être efficace, fiable, assurer la durée de vie des auxiliaires et le confort thermique demandé par les passagers.
- Lors du traitement thermique de l'air de l'habitacle, limiter la consommation électrique de la batterie pour conserver une bonne autonomie de conduite du véhicule.
- Lors du contrôle thermique des auxiliaires, limiter la consommation électrique de la batterie.

Pour cela, il est connu d'utiliser une boucle de climatisation pouvant fonctionner en tant que pompe à chaleur, ladite boucle de climatisation étant associée à un circuit dans lequel circule un fluide caloporteur. Cette boucle de climatisation comprend un compresseur, un échangeur de chaleur extérieur localisé en face avant du véhicule, un dispositif de détente et un évaporateur logé à l'intérieur d'un système de ventilation, chauffage et/ou climatisation. L'échangeur de chaleur extérieur assure, selon un mode normal de fonctionnement de la boucle de climatisation, le refroidissement du fluide réfrigérant, et selon un mode de fonctionnement dit « pompe à chaleur », le réchauffement du fluide réfrigérant. L'évaporateur, localisé à l'intérieur du système de ventilation, chauffage et/ou climatisation, permet le refroidissement de l'air le traversant et le réchauffement du fluide réfrigérant. Le circuit comprend une pompe, un radiateur installé à l'intérieur du système de ventilation, chauffage et/ou climatisation et un échangeur de chaleur réfrigérant-caloporteur. Le radiateur assure le chauffage de l'air le traversant. L'échangeur de chaleur réfrigérant-caloporteur, localisé en sortie du compresseur de la boucle de climatisation, permet l'échange de chaleur du fluide réfrigérant de la boucle de climatisation à haute pression vers le fluide caloporteur du circuit pour le chauffage de l'air traversant l'échangeur de chaleur air-caloporteur. Un tel dispositif est connu du document US 5 641 016.

Cependant, lorsqu'une boucle de climatisation est utilisée normalement (mode normal ou climatisation), l'échangeur de chaleur extérieur placé en face avant du véhicule est dimensionné de sorte à assurer le refroidissement du fluide réfrigérant le traversant de manière optimale. Or, ce dimensionnement pour le refroidissement du fluide réfrigérant ne convient pas pour le réchauffement du fluide réfrigérant lors du mode « pompe à chaleur » et implique de faibles performances thermiques lors du mode « pompe à chaleur ». Ainsi, le fait de pouvoir utiliser l'échangeur de chaleur comme un évaporateur lors du mode « pompe à chaleur » implique une limitation du coefficient de performance de la boucle de climatisation. En effet, le dimensionnement de l'échangeur de chaleur extérieur est un compromis entre la surface d'échange satisfaisante entre le réfrigérant et le flux d'air et la perte de charge convenable du flux d'air et/ou du réfrigérant. Néanmoins, ces deux critères (surface d'échange et perte de charge) ne sont pas déterminés de manière optimale. En particulier, les dispositions de conception du dimensionnement nécessaires pour augmenter la surface d'échange, ainsi que celles nécessaires pour réduire la perte de charge, conduisent à réduire les performances de l'échangeur de chaleur extérieur en mode normal de la boucle, par exemple en modifiant le circuitage interne de l'échangeur de chaleur extérieur ou en espaçant les ailettes pour éviter la rétention d'eau.

Un autre système de gestion thermique pour véhicule automobile est connu du document DE 10 2006 042 788 A, comprenant une boucle dans laquelle circule un fluide réfrigérant et comprenant un compresseur, un premier dispositif de détente, un échangeur de chaleur extérieur et un évaporateur, un circuit dans lequel circule un fluide caloporteur et comprenant au moins une pompe, et un premier échangeur de chaleur réfrigérant-caloporteur relié à la boucle, ainsi qu'un deuxième échangeur de chaleur réfrigérant-caloporteur relié à la boucle. Par ailleurs, EP 1 489 367 divulgue un système connu, avec un unique échangeur de chaleur réfrigérant-caloporteur.

L'invention vient palier à ces inconvénients par un système de gestion thermique pour véhicule automobile comprenant une boucle dans laquelle circule un fluide réfrigérant et comprenant un compresseur, un premier dispositif de détente, un échangeur de chaleur extérieur et un évaporateur, un circuit dans lequel circule un fluide caloporteur et comprenant au moins une pompe et un premier échangeur de chaleur réfrigérant-caloporteur relié à la boucle, le circuit comprenant un deuxième échangeur de chaleur réfrigérant-caloporteur relié à la boucle, l'échangeur de chaleur extérieur, le premier dispositif de détente et le premier échangeur de chaleur réfrigérant-caloporteur étant connectés en série.

La présence du deuxième échangeur de chaleur réfrigérant-caloporteur permet de palier cette diminution du coefficient de performance de la boucle. D'une part, selon le mode de fonctionnement de la boucle, chacun des ces deux échangeurs de chaleur agit à tour de rôle pour améliorer les performances thermiques de la boucle. D'autre part, lorsqu'ils sont utilisés en combinaison, ces deux échangeurs agissent comme un échangeur de chaleur interne d'une boucle classique, améliorant notablement le coefficient de performance de la boucle.

Selon d'autres caractéristiques supplémentaires :
- le circuit comprend un radiateur.
- le circuit comprend un condenseur interne.
- le premier échangeur de chaleur réfrigérant-caloporteur est localisé en sortie du compresseur et le deuxième échangeur de chaleur réfrigérant-caloporteur est localisé en entrée du compresseur.
- le circuit comprend au moins un auxiliaire.
- l'auxiliaire comprend une batterie, un système de propulsion ou traction, et/ou un dispositif électronique.
- l'auxiliaire est localisé en sortie de la pompe.
- le circuit comprend un échangeur de chaleur air-caloporteur.
- le circuit comprend un dispositif de chauffage électrique.
- le circuit comprend un dispositif de stockage thermique.
- le premier et le deuxième échangeurs de chaleur réfrigérant-caloporteur sont disposés en série par rapport au dispositif de stockage thermique.
- le dispositif de stockage thermique est localisé en entrée du premier échangeur de chaleur réfrigérant-caloporteur.
- le premier et le deuxième échangeurs de chaleur réfrigérant-caloporteur sont disposés en parallèle par rapport au dispositif de stockage thermique.
- le circuit comprend une pompe additionnelle.

D'autres caractéristiques, détails et avantages de l'invention ressortiront plus clairement à la lecture de la description donnée ci-après à titre indicatif en relation avec des dessins dans lesquels :
- la figure 1 est un schéma d'un premier mode de réalisation du système de gestion thermique selon l'invention,
- la figure 2 est un schéma d'une variante du premier mode de réalisation du système de gestion thermique selon l'invention,
- les figures 3 à 3h illustrent les différents modes de fonctionnement d'un deuxième mode de réalisation du système de gestion thermique selon l'invention.

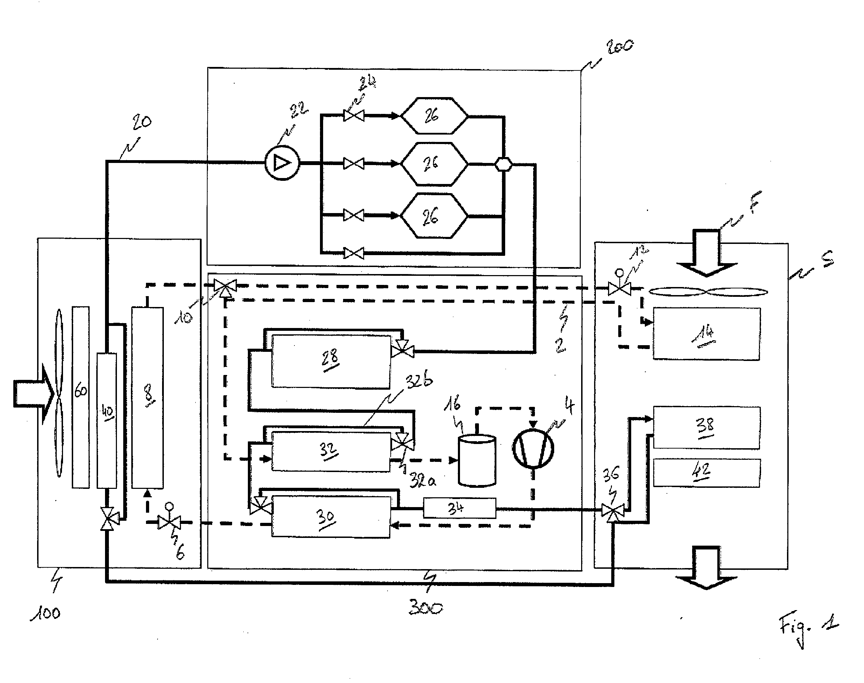

La figure 1 illustre un premier mode de réalisation de l'invention. Le système de gestion thermique 1 comprend une boucle 2 dans laquelle circule un fluide réfrigérant. Le fluide réfrigérant (ci-après nommé « réfrigérant ») est du R134a, du CO₂ (R744) ou du R1234yf. Cette boucle 2 comprend un compresseur 4, un premier dispositif de détente 6, un échangeur de chaleur extérieur 8, une vanne 10, un deuxième dispositif de détente 12 et un évaporateur 14 et une bouteille 16. Le compresseur est électrique et est alimenté en énergie par la batterie du véhicule. L'échangeur de chaleur extérieur 8 est localisé en face avant du véhicule automobile et est traversé par un flux d'air en provenance de l'extérieur du véhicule. L'évaporateur 14 est localisé à l'intérieur d'un système de ventilation chauffage et/ou climatisation S dans lequel un flux d'air principal F circule pour être traiter thermiquement préalablement avant son introduction dans l'habitacle du véhicule automobile. Le premier 6 et le deuxième 12 dispositifs de détente sont disposés en série par rapport à l'échangeur de chaleur extérieur 8. Plus précisément, le premier dispositif de détente 6 est localisé en entrée de l'échangeur de chaleur extérieur et le deuxième dispositif de détente 12 est localisé en sortie de l'échangeur de chaleur extérieur 8.

Le système de gestion thermique 1 comprend également un circuit 20 dans lequel circule un fluide caloporteur (ci-après nommé « caloporteur »), par exemple de l'eau glycolée. Ce circuit 20 comprend une pompe 22, des vannes 24, des auxiliaires 26 tels que la batterie électrique du véhicule, le système de traction ou de propulsion du véhicule et tout autre dispositif électrique dégageant de la chaleur, un dispositif de stockage thermique 28, un premier échangeur de chaleur réfrigérant-caloporteur 30, un deuxième échangeur de chaleur réfrigérant-caloporteur 32, un dispositif de chauffage électrique 34, une vanne 36, un radiateur 38 et un échangeur de chaleur air-caloporteur 40.

Le dispositif de stockage thermique 28 loge un moyen de stockage thermique M. Ce moyen de stockage thermique M est un matériau à changement de phase, par exemple de l'eau, du glycol, une solution saline ou de la paraffine, et permet de stocker des calories (c'est-à-dire de la chaleur) ou des frigories (c'est-à-dire du froid) qui seront diffusées dans le circuit 20 via le caloporteur. Le moyen de stockage thermique permet donc d'accumuler de l'énergie thermique par chaleur latente (changement de phase) ou par chaleur sensible. Une description plus précise de ce dispositif de stockage thermique 28 sera faire ultérieurement.

Le premier échangeur de chaleur réfrigérant-caloporteur 30 est relié à la boucle 2. On entend par « relié » le fait que le premier échangeur de chaleur réfrigérant-caloporteur 30 comprend un canal pour la circulation du réfrigérant. Ainsi, le réfrigérant et le caloporteur circulent à l'intérieur du premier échangeur de chaleur réfrigérant-caloporteur 30, il permet donc un échange de calories ou de frigories entre le caloporteur du circuit 20 et le réfrigérant de la boucle 2. Ce premier échangeur de chaleur réfrigérant-caloporteur 30 est relié à la boucle 2 en aval du compresseur 4 selon le sens de circulation du réfrigérant. Autrement dit, le premier échangeur de chaleur réfrigérant-caloporteur 30 est relié à la sortie du compresseur 4.

Le deuxième échangeur de chaleur réfrigérant-caloporteur 32 est relié à la boucle 2. Il permet un échange de calories ou de frigories entre le caloporteur du circuit 20 et le réfrigérant de la boucle 2. Ce deuxième échangeur de chaleur réfrigérant-caloporteur 32 est relié à la boucle 2 en amont du compresseur 4 selon le sens de circulation du réfrigérant. Autrement dit, le deuxième échangeur de chaleur réfrigérant-caloporteur 32 est relié à l'entrée du compresseur 4.

Le dispositif de chauffage électrique 34 comprend des éléments résistifs non représentés, tels que des pierres à coefficient de température positif, permettant de convertir de l'énergie électrique en provenance de la batterie du véhicule en énergie thermique. Ces éléments résistifs permettent donc de chauffer le caloporteur. En variante, le dispositif de chauffage électrique 34 est localisé dans le circuit 20 et un second dispositif de chauffage électrique est localisé à l'intérieur du dispositif de stockage thermique 28.

Le radiateur 38 est localisé à l'intérieur du système de ventilation, chauffage et/ou climatisation S et permet un échange de chaleur entre le flux d'air principal F traversant le radiateur 38 et le caloporteur.

L'échangeur de chaleur air-caloporteur 40 est localisé en face avant du véhicule et permet un échange de chaleur entre un flux d'air extérieur et le caloporteur. Comme indiqué précédemment, l'association d'une boucle de climatisation et d'un circuit tel que décrit ci-dessus permet d'améliorer le coefficient de performance de la boucle 2. En outre, le système de gestion thermique 1 permet de s'affranchir du givrage de l'échangeur de chaleur extérieur lors du mode « pompe à chaleur». Ainsi, un gain en efficacité de la boucle de climatisation est obtenu. En effet, lorsque l'échangeur de chaleur extérieur givre, la boucle 2 ne peut plus fonctionner correctement puisque l'échangeur de chaleur extérieur est obturé par le givre et aucun flux d'air extérieur ne peut le traverser.

Pour ce premier mode de réalisation, trois modes de fonctionnement vont être décrits.

Le premier mode de fonctionnement du système de gestion thermique de boucles de climatisation 1 intervient lorsque la température extérieure est comprise entre 25 et 50°C et l'on souhaite refroidir l'air de l'habitacle donc le flux d'air principal F.

Pour ce premier mode, il existe deux situations. La première situation est celle dans laquelle le dispositif de stockage thermique 34 est complètement chargé en frigories. On entend par « complètement chargé » le fait que le dispositif de stockage thermique 34 stocke la quantité maximale de frigories possible, par exemple entre 0 et 5°C.

Selon ce premier mode, la boucle 2 fonctionne selon un mode normal de fonctionnement, c'est-à-dire la mise en oeuvre de la boucle 2 permet de refroidir le flux d'air principal F traversant l'évaporateur 14, le réfrigérant circulant de la manière suivante. Le réfrigérant est comprimé dans le compresseur 4 de sorte à être dans un état de haute température et de haute pression. Le réfrigérant à haute pression traverse le premier dispositif de détente 6 sans être détendu et atteint ensuite l'échangeur de chaleur extérieur 8 dans lequel il se refroidit. Dans un mode de fonctionnement normal, l'échangeur de chaleur extérieur 8 agit donc comme un condenseur ou refroidisseur de gaz. En sortie de l'échangeur de chaleur extérieur 8, le réfrigérant sous haute pression passe à l'intérieur de la vanne 10 puis subit une détente en passant à l'intérieur du deuxième dispositif de détente 12. En sortant du deuxième dispositif de détente 12, le réfrigérant est à l'état de basse pression et atteint l'évaporateur 14 dans lequel il est réchauffé. Ainsi, le flux d'air principal F est refroidi en traversant l'évaporateur 14. Enfin, le réfrigérant traverse la bouteille 16 puis atteint le compresseur 4.

Le circuit 20 fonctionne simultanément à la boucle 2 de la manière suivante. La pompe 22 est alimentée en énergie électrique de sorte à faire circuler le caloporteur à l'intérieur du circuit 20. Le caloporteur traverse le dispositif de stockage thermique 28 et se charge en frigories. En sortie du dispositif de stockage thermique 28, le caloporteur est par conséquent à une température entre 0 et 5°C. Le caloporteur atteinte ensuite directement le premier échangeur de chaleur réfrigérant-caloporteur 30 puis que le deuxième échangeur de chaleur réfrigérant-caloporteur 32 est contourné via une ligne de contournement 32b à l'aide d'une vanne 32a. Un échange de chaleur est alors réalisé entre le caloporteur et le réfrigérant, les frigories du caloporteur étant transmises au réfrigérant assurant ainsi un refroidissement du réfrigérant. Ce refroidissement vient compléter du point de vue thermique le refroidissement du réfrigérant à l'intérieur de l'échangeur de chaleur extérieur 8. Le caloporteur revient ensuite dans la pompe 22.

Du fait de la température extérieure élevée, il est possible que le caloporteur passe au travers des auxiliaires 26 afin d'évacuer les calories de ces auxiliaires 26. En d'autres termes, il est possible de refroidir également les auxiliaires 26 tout en refroidissant le réfrigérant.

Si la température extérieure le permet, par exemple avec une température de 25°C, il est possible d'utiliser l'échangeur de chaleur air-caloporteur 40 pour refroidir le caloporteur par le flux d'air extérieur. Cette variante présente l'avantage de ralentir la décharge en frigories du dispositif de stockage thermique 28 puisque les frigories apportés au caloporteur proviennent à la fois du moyen de stockage thermique M stocké dans le dispositif de stockage thermique et du flux d'air extérieur traversant l'échangeur de chaleur air-caloporteur 40.

La deuxième situation est celle dans laquelle la quantité de frigories stockées dans le dispositif de stockage thermique n'est pas suffisante (environ 25°C) pour refroidir le réfrigérant passant à l'intérieur du premier échangeur de chaleur réfrigérant-caloporteur 30. Cette deuxième situation apparaît lorsque la première situation a duré suffisamment longtemps pour que la température du moyen de stockage thermique M passe de 0 à 25°C. Dans ce cas, le réfrigérant est refroidi soit par l'intermédiaire de l'échangeur de chaleur air-caloporteur 40.

Le deuxième mode de fonctionnement du système de gestion thermique 1 intervient lorsque la température extérieure est comprise entre -5 et 10°C et lorsque l'on souhaite chauffer l'air de l'habitacle donc le flux d'air principal F.

Pour ce deuxième mode, il existe également deux situations. La première situation est celle dans laquelle le dispositif de stockage thermique 34 est complètement chargé en calories. On entend par « complètement chargé » le fait que le dispositif de stockage thermique 34 stocke la quantité maximale de calories possible, par exemple à 90°C.

Selon cette première situation du deuxième mode, la boucle 2 ne fonctionne pas. En effet, seules les calories du dispositif de stockage thermique 28 sont utilisées pour chauffer le flux d'air principal F traversant le radiateur 38. A cet égard, la pompe 22 est mise en oeuvre et le caloporteur se charge en calories en passant à l'intérieur du dispositif de stockage thermique 28. Ensuite, le caloporteur atteint directement le radiateur 38 sans passer par le premier et le deuxième échangeur de chaleur réfrigérant-caloporteur. Une fois les calories du caloporteur transmises au flux d'air principal F via le radiateur 38, le caloporteur retourne à la pompe 22. En variante, le flux d'air principal F est chauffé de manière supplémentaire directement par le réchauffeur électrique 42 ou indirectement par le dispositif de chauffage électrique 34.

La deuxième situation est celle dans laquelle la température du moyen de stockage thermique M logé à l'intérieur du dispositif de stockage n'est pas suffisamment élevée pour obtenir le confort thermique désiré. Dans cette situation, la température du moyen de stockage thermique est inférieure à celle visée pour l'air de l'habitacle mais supérieure à la température extérieure. Par exemple, la température du moyen de stockage thermique M est de 30°C.

La boucle 2 est ici mise en oeuvre pour fournir les calories nécessaires au chauffage du flux d'air principal F. La boucle fonctionne alors selon un mode dit « pompe à chaleur ». Lorsque la boucle 2 fonctionne selon un mode de fonctionnement dit « pompe à chaleur », le réfrigérant, préalablement comprimé par le compresseur 4, subit un refroidissement lorsqu'il circule à l'intérieur du premier échangeur de chaleur réfrigérant-caloporteur 30. Ce refroidissement du réfrigérant est obtenu par un échange de chaleur entre le réfrigérant et le caloporteur passant à l'intérieur du premier échangeur de chaleur réfrigérant-caloporteur 30. En d'autres termes, le caloporteur se charge en calories en provenance du réfrigérant. Les calories transmises au caloporteur permettent ainsi de chauffer le flux d'air principal F traversant le radiateur 38. Une fois le réfrigérant sorti du premier échangeur de chaleur réfrigérant-caloporteur 30, il atteint le premier dispositif de détente 6 dans lequel il subit un détente. Ensuite, le réfrigérant est chauffé par le flux d'air extérieur traversant l'échangeur de chaleur extérieur 8. Dans le mode de fonctionnement « pompe à chaleur », l'échangeur de chaleur extérieur 8 agit donc comme un évaporateur. Lorsque le réfrigérant traverse la vanne 10, il est dirigé vers la bouteille 16 pour atteindre le compresseur 4. En effet, la vanne 10 permet de diriger le réfrigérant soit vers le deuxième dispositif de détente 12 et l'évaporateur 14 pour un mode de fonctionnement normal, soit vers la bouteille 16 et le compresseur 4 pour un mode de fonctionnement « pompe à chaleur ».

Les calories du dispositif de stockage thermique 28 sont également utilisées pour le chauffage du flux d'air principal F en complément de celles apportées par la boucle 2. Pour ce faire, le caloporteur traverse le dispositif de stockage thermique 28 et se charge en calories. Il atteint ensuite directement le premier échangeur de chaleur réfrigérant-caloporteur 30 dans lequel il se charge en calories supplémentaires en provenance du réfrigérant.

En variante, le caloporteur traverse le deuxième échangeur de chaleur réfrigérant-caloporteur 32 avant de traverser le premier échangeur de chaleur réfrigérant-caloporteur 30. Ceci présente l'avantage d'effectuer un chauffage du réfrigérant qui vient compléter le chauffage du réfrigérant lorsque ce dernier passe à l'intérieur de l'échangeur de chaleur extérieur 8. En effet, l'association d'une boucle de climatisation et d'un circuit tel que décrit ci-dessus permet de s'affranchir du givrage de l'échangeur de chaleur extérieur lors du mode « pompe à chaleur ». De la sorte, le risque de givrage de l'échangeur de chaleur extérieur 8 est fortement diminué. En effet, puisque le réfrigérant est chauffé par le caloporteur à l'intérieur du deuxième échangeur de chaleur réfrigérant-caloporteur 32, la température du réfrigérant est alors supérieure à la température pour laquelle l'humidité du flux d'air extérieur se condense ou givre sur l'échangeur de chaleur extérieur 8. Il est également possible d'utiliser le dispositif d'obturation 60 de sorte à interdire pour passage du flux d'air extérieur à travers l'échangeur de chaleur extérieur 8. Ainsi, le risque de givrage est éliminé.

Selon une autre variante, si les auxiliaires 26 ont besoin d'être refroidis, le caloporteur passe alors par ces auxiliaires ainsi qu'à l'intérieur de l'échangeur de chaleur air-caloporteur. Du fait de la température extérieure basse, les calories des auxiliaires 26 sont évacuées du circuit par le flux d'air extérieur traversant l'échangeur de chaleur air-caloporteur. Ces calories peuvent aussi être utilisées pour réchauffer le dispositif de stockage thermique 28 et/ou le deuxième échangeur de chaleur réfrigérant-caloporteur 32.

La boucle 2 pouvant fonctionner selon deux modes différents (normal ou « pompe à chaleur »), l'échangeur de chaleur extérieur 8 agit comme un condenseur ou un évaporateur selon le mode choisi. L'échangeur de chaleur extérieur 8 est donc dimensionné afin d'offrir les meilleures performances thermiques dans les deux modes de fonctionnement. On entend par « dimensionnement » à la fois les dimensions structurelles de l'échangeur de chaleur et son système de gestion thermique interne assurant l'échange de chaleur entre le réfrigérant et le flux d'air extérieur. Cependant, un tel échangeur de chaleur extérieur n'offre pas de performances équivalentes à un condenseur en tant que tel ou à un évaporateur en tant que tel. En effet, un condenseur est habituellement de dimension plus importante qu'un évaporateur car le réfrigérant passant à l'intérieur du condenseur nécessite un apport conséquent de frigories en provenance du flux d'air extérieur pour être refroidi. Le flux d'air extérieur étant dépendant des conditions climatiques extérieures, il est parfois à une température proche de celle du réfrigérant, ce qui limite le refroidissement du réfrigérant. La surface d'échange entre le flux d'air extérieur et le réfrigérant à l'intérieur du condenseur est donc importante de sorte à pouvoir refroidir le réfrigérant quelque soient les conditions climatiques extérieures.

Un troisième mode de fonctionnement est également possible. Ce troisième mode de fonctionnement est appelé « mode déshumidification » et intervient pour une température extérieure de l'air entre 5 et 15°C, de préférence à 10°C. Dans ce mode de fonctionnement, il est recherché le refroidissement du flux d'air principal F pour condenser les gouttes d'eau du flux d'air principal et fournir un air de l'habitacle sec et le chauffage du flux d'air principal F.

Selon ce troisième mode, la boucle 2 est mise en oeuvre de sorte à refroidir le flux d'air principal F pour condenser les gouttes d'eau présentes dans le flux d'air principal F. Ainsi, la boucle 2 est utilisée de manière similaire à celle du premier mode de fonctionnement dans lequel l'évaporateur 14 est utilisé.

En même temps, le circuit 20 fonctionne de manière à utiliser les calories stockées dans le dispositif de stockage thermique 28 comme source de chaleur pour chauffer le flux d'air principal F. A cet égard, la pompe 22 fonctionne pour alimenter en caloporteur le dispositif de stockage thermique 28. Le caloporteur se charge en calories puis arrive directement dans le radiateur 38 puis retourne à la pompe 22.

En variante, si le dispositif de stockage thermique ne contient pas assez de calories pour les besoins requis, le caloporteur passe à l'intérieur du premier échangeur de chaleur réfrigérant-caloporteur 30 pour se charger en calories apportées par le réfrigérant.

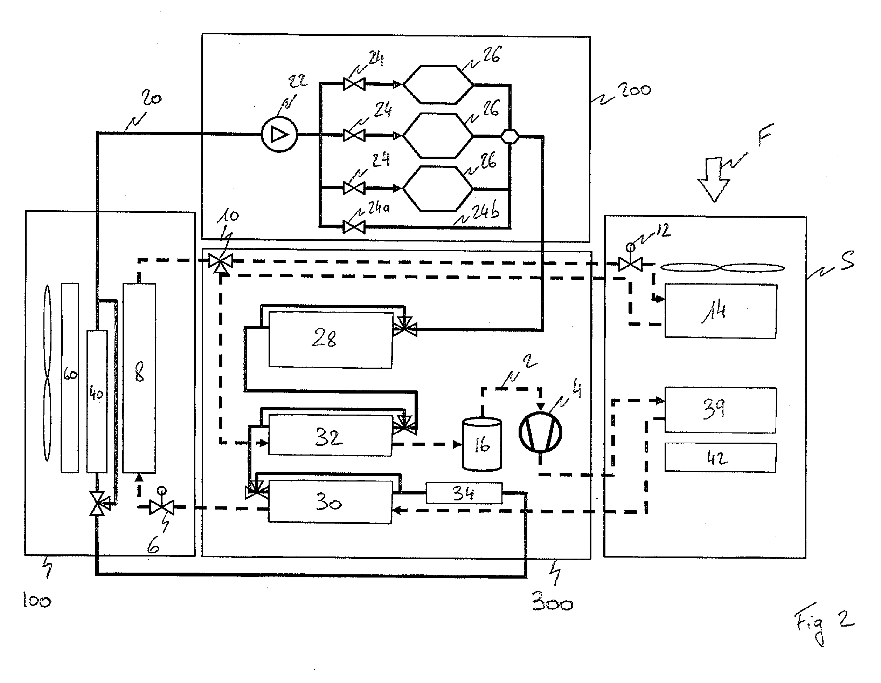

La figure 2 illustre une variante possible du premier mode de réalisation dans laquelle le radiateur 38 est remplacé par un condenseur interne 39, en conservant l'ensemble du reste de l'architecture. Cette variante présente l'avantage d'un meilleur chauffage du flux d'air principal F puisque les calories produites par la boucle 2 sont directement utilisées pour chauffer ce flux d'air via le réfrigérant et non plus via le caloporteur. En effet, le chauffage du flux d'air principal par le circuit (via le radiateur 38) implique un échange thermique intermédiaire entre le réfrigérant et le caloporteur qui n'existe plus dans cette variante d'où un meilleur rendement énergétique.

Plus particulièrement, la boucle 2 est modifiée en y ajoutant un condenseur interne 39 en sortie du compresseur 4. Ce condenseur interne 39 est localisé à l'intérieur du système de ventilation, chauffage et/ou climatisation et assure le chauffage du flux d'air principal F. Du point de vue du réfrigérant, l'entrée du condenseur interne 39 est reliée à la sortie du compresseur 4 et la sortie du condenseur interne 39 est reliée au premier dispositif de détente 6.

Le circuit 20 est également modifié en conséquence. Le radiateur 38 ainsi que la vanne 36 sont supprimés. De la sorte, le caloporteur sortant du premier échangeur de chaleur réfrigérant-caloporteur 30 puis du dispositif de chauffage électrique 34 atteint directement l'échangeur de chaleur air-caloporteur 40.

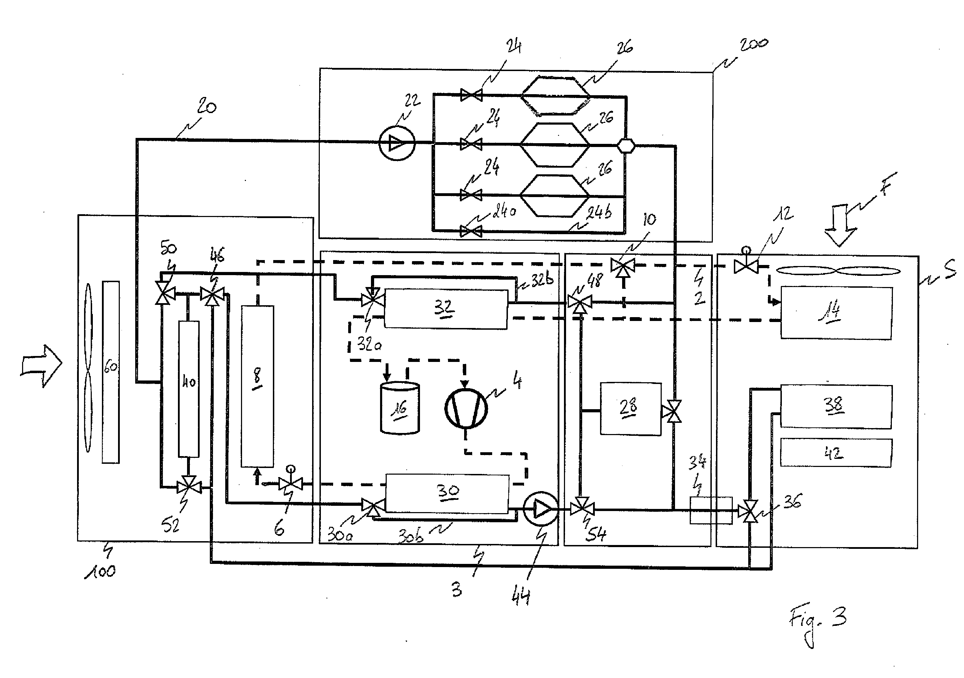

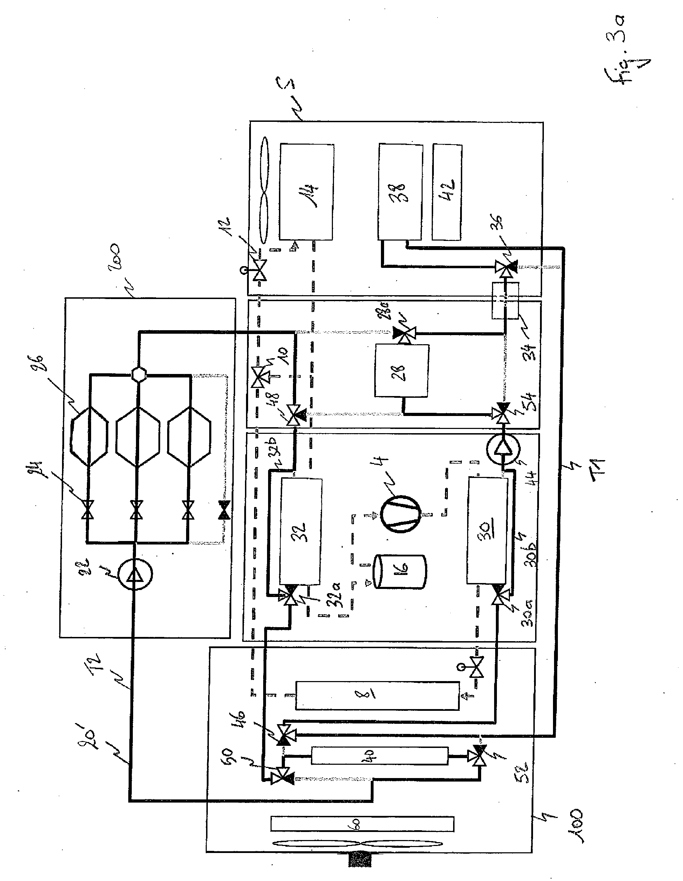

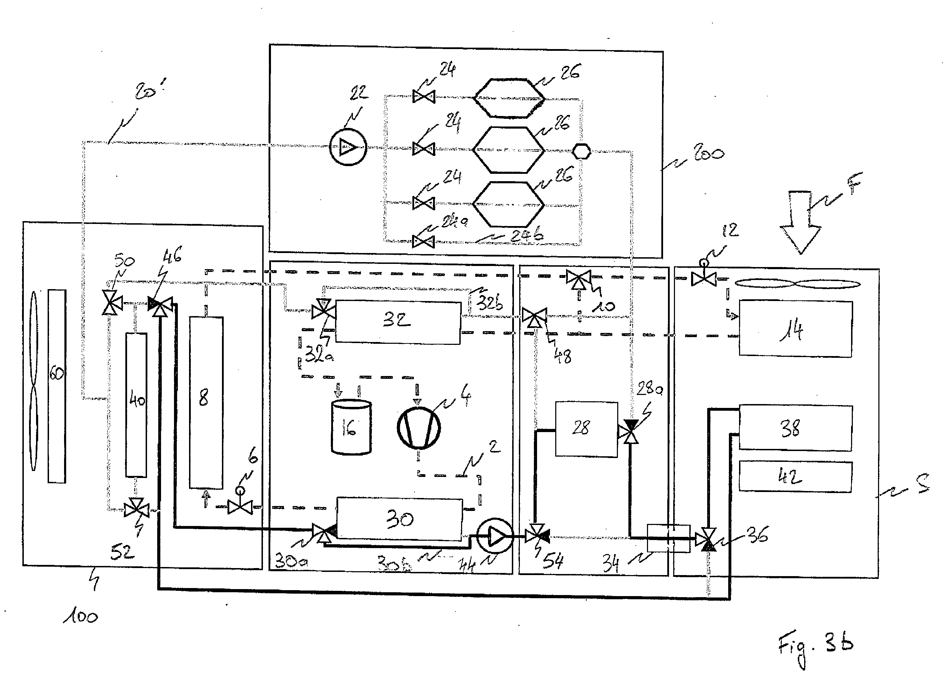

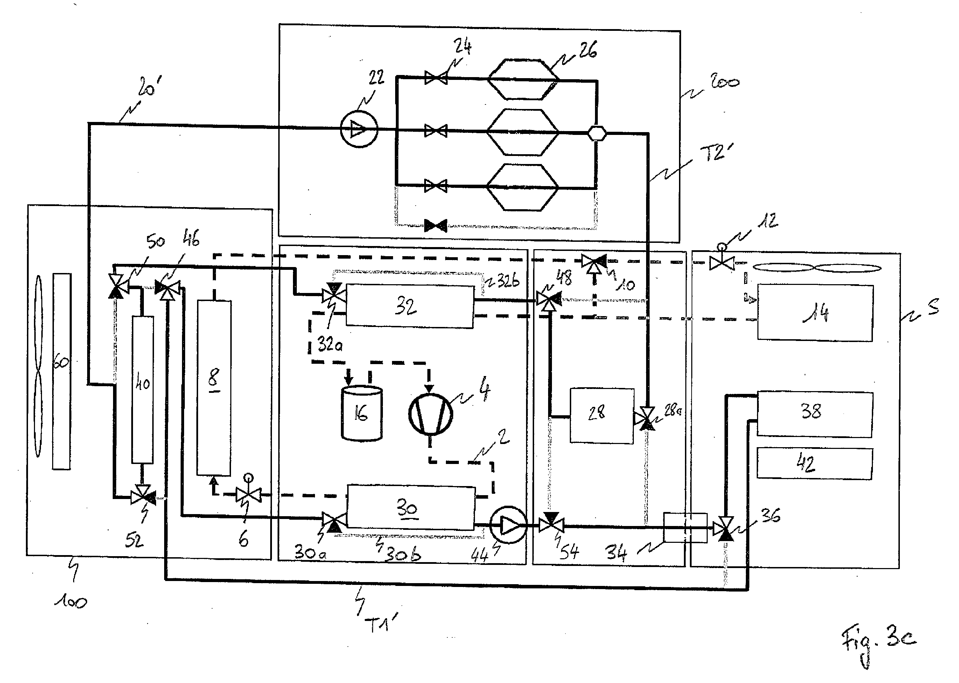

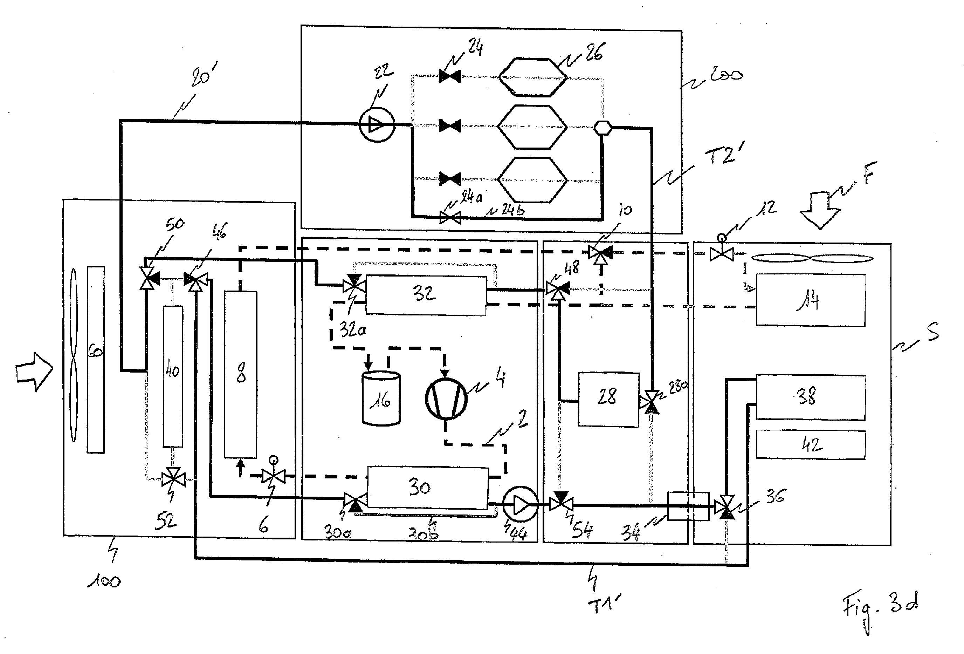

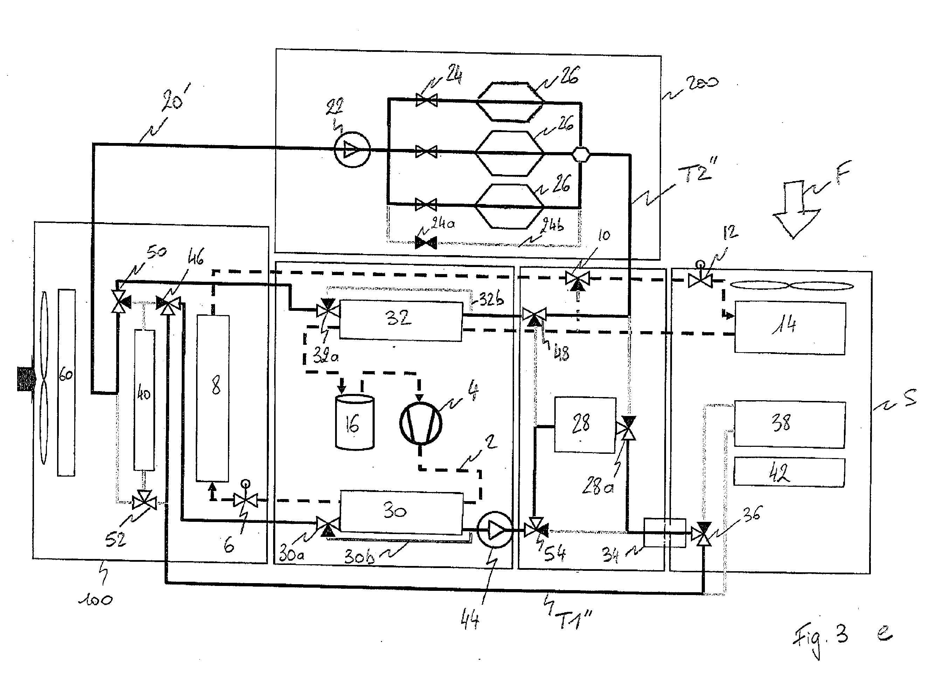

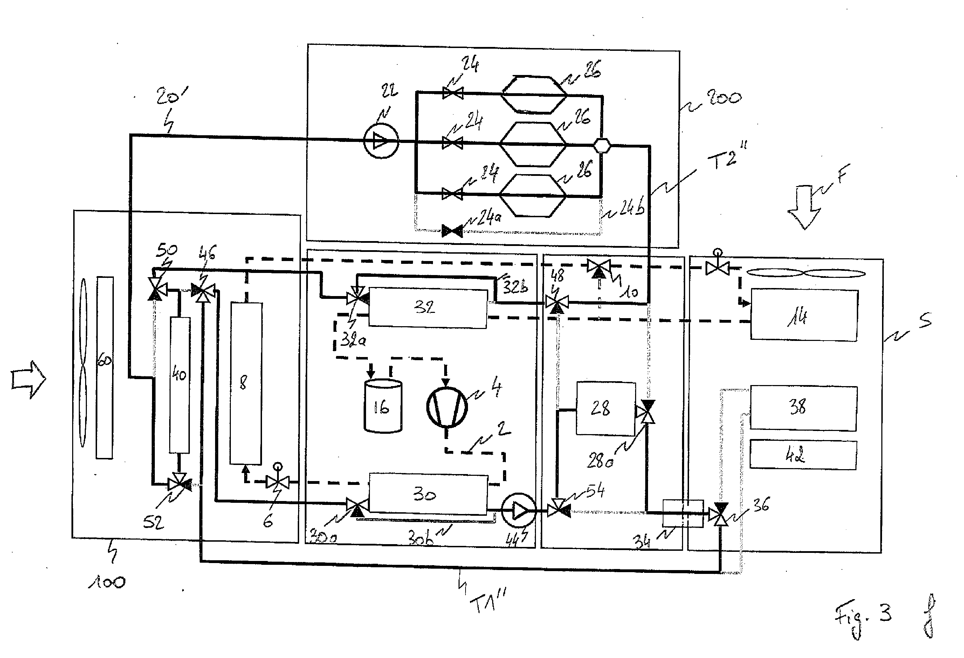

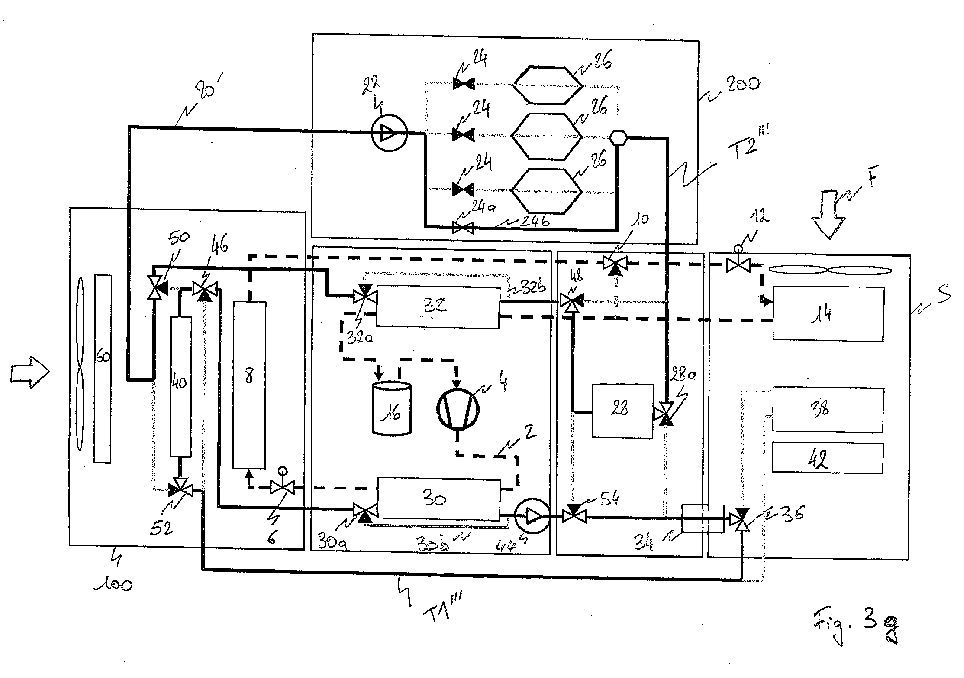

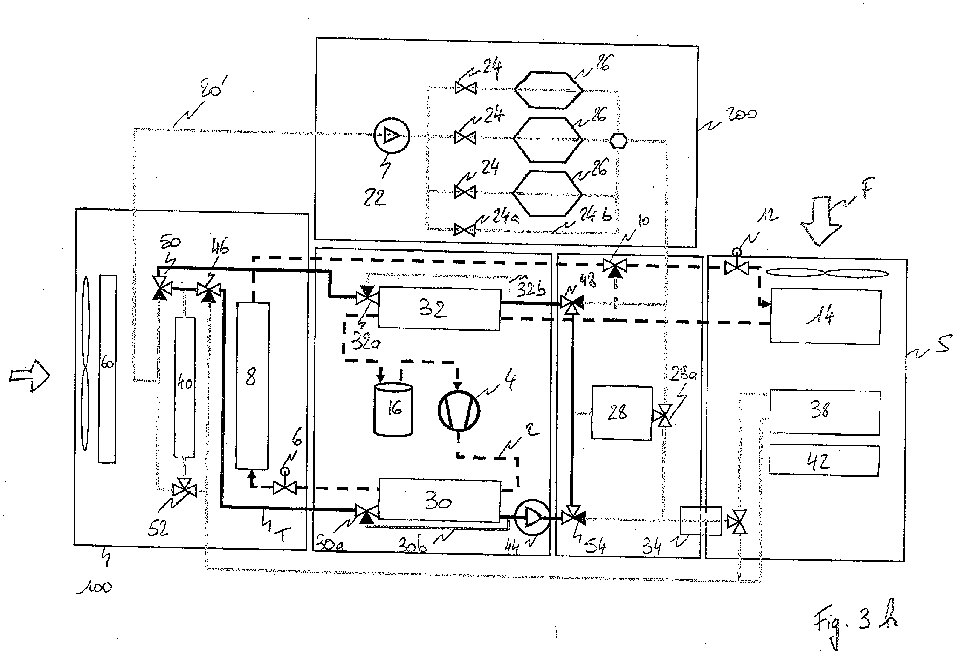

Selon un deuxième mode de réalisation illustré en figures 3 à 3h, le dispositif de stockage thermique 28 est disposé en parallèle par rapport aux premier 30 et deuxième 32 échangeurs de chaleur réfrigérant-caloporteur. Cette disposition particulière du circuit 20 présente l'avantage d'apporter aux passagers du véhicule un confort thermique affiné et optimal quelque soient les conditions climatiques extérieures et quelque soit la demande thermique requise par les auxiliaires 26.

Le système de gestion thermique 1 selon ce deuxième mode de réalisation comprend une boucle 2 identique à celle décrite dans le premier mode de réalisation et un circuit 20' dans lequel le dispositif de stockage thermique 28 est disposé en parallèle des premier 30 et deuxième 32 échangeurs de chaleur réfrigérant-caloporteur. Le dispositif de stockage thermique 28 est également en parallèle par rapport à l'échangeur de chaleur air-caloporteur 40. De ce fait, les références du premier mode de réalisation seront utilisées à l'identique pour le deuxième mode de réalisation pour les composants ne subissant aucune modification.

Le circuit 20' comprend également une pompe additionnelle 44. Cette pompe additionnelle 44 est localisée entre le premier échangeur de chaleur réfrigérant-caloporteur 30 et le dispositif de stockage thermique 28. La présence de deux pompes 22, 44 dans le circuit 20' permet de créer, selon le mode de fonctionnement choisi du système de gestion thermique 1, deux trajets indépendants du caloporteur à l'intérieur du circuit 20'. Pour chaque mode de fonctionnement décrit ultérieurement et selon les conditions climatiques extérieures, les vannes du circuit 20' sont ouvertes et/ou fermées de sorte à former un ou deux trajets indépendants de caloporteur à l'intérieur du circuit 20'.

La figure 3a représente le mode de fonctionnement dans lequel le flux d'air principal F est chauffé au démarrage du véhicule lors de conditions hivernales.

Selon ce mode, la boucle 2 n'est pas en fonctionnement (c'est-à-dire le compresseur est éteint). Le flux d'air principal F est chauffé par les calories extraites du dispositif de stockage thermique 28 préalablement chargé lors du stationnement à l'arrêt du véhicule dans une maison. On considère ici que la température du matériau à changement de phase est d'au moins 90°C. Pour réaliser ce chauffage du flux d'air principal F, la pompe additionnelle 44 achemine le caloporteur selon un premier trajet T1 comprenant dans le sens de circulation du caloporteur la pompe additionnelle 44, une vanne 54, le dispositif de stockage thermique 28, la vanne 28a, le dispositif de chauffage électrique 34, la vanne 36, le radiateur 38, une vanne 46, la vanne 30a et la ligne de contournement associée 30b. La vanne 54 permet de diriger le caloporteur vers le dispositif de stockage thermique 28. La vanne 36 permet de diriger la caloporteur vers le radiateur 38 et la vanne 46 permet de diriger le caloporteur vers la vanne 30a et d'interdire le passage du caloporteur vers l'échangeur de chaleur air-caloporteur 40. Pour permettre au caloporteur d'effectuer ce premier trajet T1, la vanne 30a est configurée pour diriger le caloporteur dans la ligne de cour tournement 30b et ainsi empêcher le caloporteur de traverser le premier échangeur de chaleur réfrigérant-caloporteur 30. Sortant du dispositif de chauffage électrique 34, le caloporteur est amené vers le radiateur 38 par l'intermédiaire de la vanne 36. Enfin, la vanne 28a dirige le caloporteur vers le dispositif de stockage thermique 28 et l'empêche d'atteindre les auxiliaires 26.

En variante, le flux d'air principal F est chauffé par à la fois par le radiateur 38 et par le réchauffeur électrique 42.

Même lors de conditions hivernales, il peut être nécessaire de refroidir les auxiliaires 26. Ainsi, le caloporteur suit un deuxième trajet T2 de la manière suivante. La pompe 22 achemine le caloporteur vers les auxiliaires 26 via les vannes respectives 24. Ensuite, le caloporteur atteint directement l'échangeur de chaleur air-caloporteur 40 qui permet aux calories émises par les auxiliaires 26 d'être évacuées du circuit 20' par le flux d'air extérieur traversant ledit échangeur 40. En effet, ce flux d'air extérieur est à une température inférieure ou égale à 5°C et inférieure à la température du caloporteur en entrée de l'échangeur de chaleur air-caloporteur 40. pour ce faire, le caloporteur en sortie des auxiliaires 26 passe par une vanne 48 qui le dirige vers le deuxième échangeur de chaleur réfrigérant-caloporteur 32 et interdit le passage vers le dispositif de stockage thermique 28. Le caloporteur contourne ensuite le deuxième échangeur de chaleur réfrigérant-caloporteur 32 via une ligne de contournement 32b et sa vanne 32a associée. Une vanne 50 dirige le caloporteur vers l'échangeur de chaleur air-caloporteur 40 et interdit son contournement. Le caloporteur traverse l'échangeur de chaleur air-caloporteur 40 et atteint une vanne 52 qui le dirige vers la pompe 22.

Selon le mode décrit ci-dessus, les vannes 28a, 50 et 52 sont configurées de sorte à ce que le premier T1 et le deuxième T2 trajets soient indépendants l'un de l'autre. En d'autres termes, les premier T1 et deuxième T2 trajets ne communiquent pas fluidiquement entre eux.

En variante, représentée en figure 3b, seul le premier trajet T1 est mis en oeuvre. En effet, on considère ici que les auxiliaires 26 n'ont pas besoin d'être refroidis au démarrage du véhicule.

En figures 3c et 3d est illustré le mode de fonctionnement dans lequel le flux d'air principal F est chauffé lorsque le véhicule est en train de roulé et lors de conditions hivernales. On considère alors que la température du moyen de stockage thermique M a baissé par rapport au mode précédent du fait de l'utilisation du dispositif de stockage thermique 28 et est de 50°C.

En figure 3c, la boucle 2 est ici mise en oeuvre (compresseur 4 allumé). Le réfrigérant, une fois comprimé par le compresseur 4, est à haute pression et haute température, passe à l'intérieur du premier échangeur de chaleur réfrigérant-caloporteur 30 et échange ces calories vers le caloporteur. Le réfrigérant est ensuite détendu à l'intérieur du premier dispositif de détente 6 puis est chauffé en passant à l'intérieur de l'échangeur de chaleur extérieur 8. Le réfrigérant revient vers le compresseur 4 en passant par la vanne 10 laquelle est configurée pour interdire le passage du réfrigérant vers l'évaporateur 14, par le deuxième échangeur de chaleur réfrigérant-caloporteur 32 et par la bouteille 16. Le réfrigérant est chauffé à nouveau lorsqu'il passe dans le deuxième échangeur de chaleur réfrigérant-caloporteur 32 en recevant les calories du caloporteur.

A l'intérieur du circuit 20', deux trajets du caloporteur sont réalisés. Le premier trajet T1' comprend, selon le sens de circulation du caloporteur, la pompe additionnelle 44, la vanne 54, le dispositif de chauffage électrique 34, la vanne 36, le radiateur 38, la vanne 46, la vanne 30a et le premier échangeur de chaleur réfrigérant-caloporteur 30. Ici, la vanne 54 autorise le passage du caloporteur de la pompe additionnelle 44 directement vers le dispositif de chauffage électrique 34 et interdisant le passage vers le dispositif de stockage thermique 28, la vanne 30a est configurée pour interdire le passage à l'intérieur de la ligne de contournement 30b, la vanne 36 autorise le passage vers la radiateur 38, la vanne 46 autorisant le passage vers la vanne 30a et le premier échangeur de chaleur réfrigérant-caloporteur 30. Le flux d'air principal F est donc chauffé via les calories accumulées par le caloporteur dans le premier échangeur de chaleur réfrigérant-caloporteur 30. En variante, le dispositif de chauffage électrique 34 est mis en oeuvre pour augmenter la température du caloporteur.

Le deuxième trajet T2' comprend, selon le sens de circulation du caloporteur, la pompe 22, les vannes 24, les auxiliaires 26, la vanne 28a, le dispositif de stockage thermique 28, la vanne 48 la ligne de contournement 32b et la vanne 32a associée, la vanne 50, l'échangeur de chaleur air-caloporteur 10 et la vanne 52. Ce deuxième trajet T2' permet de refroidir les auxiliaires 26 et de réchauffer le deuxième échangeur de chaleur réfrigérant-caloporteur 32 par l'intermédiaire de l'action combinée du dispositif de stockage thermique 28 et de l'échangeur de chaleur air-caloporteur 40.

Selon ce mode, la configuration respective des vannes 28a, 50, 52 et 54 permettent aux premier T1' et deuxième T2' trajets d'être indépendants fluidiquement.

En variante, illustrée en figure 3d, les auxiliaires 26 ne sont pas refroidis. En conséquence, l'échangeur de chaleur air-caloporteur 40 n'est pas utilisé et seul le dispositif de stockage thermique 28 assure le chauffage du deuxième échangeur de chaleur réfrigérant-caloporteur 32. La configuration de la vanne 50 interdit le passage du caloporteur vers l'échangeur de chaleur air-caloporteur 40 et les vannes 24 sont fermées de sorte à interdire le passage du caloporteur vers les auxiliaires 26. de la sorte, une vanne 24a est ouverte et permet au caloporteur de traverser une ligne de contournement associée 24b, cette ligne 24b étant disposée en parallèle des auxiliaires 26 et des vannes 24.

En figures 3e et 3f est illustré un mode de fonctionnement dans lequel le flux d'air principal F est refroidi par l'évaporateur 14. Pour ce mode, les conditions climatiques sont estivales (température extérieure de 30°C) et le véhicule est à l'arrêt. Le dispositif de stockage thermique 28 est chargé de manière domestique en frigories, la température du matériau à changement de phase étant alors de 0°C.

En figure 3e, la boucle 2 est mise en oeuvre. Le réfrigérant subit un refroidissement dans le premier échangeur de chaleur réfrigérant-caloporteur 30 puis dans l'échangeur de chaleur extérieur 8. Il est détendu par le deuxième dispositif de détente 12 et subit un réchauffement dans l'évaporateur 14. Ainsi, le réfrigérant refroidit le flux d'air principal F.

A l'intérieur du circuit 20', un premier trajet T1 " comprend la pompe additionnelle 44, la vanne 54, le dispositif de stockage thermique 28, la vanne 28a, le dispositif de chauffage électrique 34, la vanne 36, la vanne 46, la vanne 30a et le premier échangeur de chaleur réfrigérant-caloporteur 30. Ici, la vanne 36 interdit le passage du caloporteur vers le radiateur 38. La vanne 54 guide la caloporteur de la pompe additionnelle 44 vers le dispositif de stockage thermique 28. Les frigories stockées à l'intérieur du dispositif de stockage thermique 28 et transportées par le caloporteur vers le premier échangeur de chaleur réfrigérant-caloporteur 30 permettent de refroidir le réfrigérant avant son refroidissement à l'intérieur de l'échangeur de chaleur extérieur 8.

Un deuxième trajet T2" comprend la pompe 22, les vannes 24, les auxiliaires 26, la vanne 48 qui guide le caloporteur vers le deuxième échangeur de chaleur réfrigérant-caloporteur 32, le deuxième échangeur de chaleur réfrigérant-caloporteur 32, la vanne 50 qui autorise le passage du caloporteur vers la pompe 22.

On comprend alors que la configuration des vannes 48, 50, 46 et 28a permettent de rendre indépendant les premier T1 " et deuxième T2" trajets.

Le refroidissement des auxiliaires 26 est ici assuré par le passage du caloporteur à l'intérieur du deuxième échangeur de chaleur réfrigérant-caloporteur 32. En effet, les calories apportées par le caloporteur à l'intérieur du deuxième échangeur de chaleur réfrigérant-caloporteur 32 permettent de chauffer le réfrigérant. Ainsi, en sortie du deuxième échangeur de chaleur réfrigérant-caloporteur 32, le caloporteur est refroidi et, en conséquence, les auxiliaires également.

En figure 3f, le système de gestion thermique 1 est mis en oeuvre pour refroidir le flux d'air principal F. La boucle 2 fonctionne de la même manière que celle décrite en figure 3e. Le premier trajet T1" est identique à celui de la figure 3e et seul le deuxième trajet T2" est modifié. A cet égard, le refroidissement des auxiliaires 26 est cette fois assurée par l'échangeur de chaleur air-caloporteur 40. De ce fait, la vanne 32a interdit le passage du caloporteur vers le deuxième échangeur de chaleur réfrigérant-caloporteur 32 et les vannes 50, 52 sont configurées pour permettre au caloporteur de traverser l'échangeur de chaleur air-caloporteur 40 puis de retourner vers la pompe 22.

En figures 3g est illustré un mode de fonctionnement dans lequel le flux d'air principal F est refroidi par l'évaporateur 14. Pour ce mode, les conditions climatiques sont estivales (température extérieure de 30°C) et le véhicule est en train de rouler. Le dispositif de stockage thermique 28 est moins chargé en frigories du fait de son utilisation selon les modes des figures 3e et 3f. La température du moyen de stockage thermique M est alors de 25°C.

La boucle 2 fonctionne de manière similaire au mode des figures 3e et 3f. Un premier trajet T1"' comprend la pompe additionnelle 44, la vanne 54, le dispositif de chauffage électrique 34, la vanne 36, la vanne 52, l'échangeur de chaleur air-caloporteur 40, la vanne 46, la vanne 30a et le premier échangeur de chaleur réfrigérant-caloporteur 30. La vanne 52 permet de diriger le caloporteur sortant du dispositif de chauffage électrique 34 et de la vanne 36 vers l'échangeur de chaleur air-caloporteur 40.

Ce premier trajet T1 "' permet de refroidir le réfrigérant à l'intérieur du premier échangeur de chaleur réfrigérant-caloporteur 30, les calories transférées du réfrigérant vers le caloporteur étant évacuées du système de gestion thermique 1 par l'échangeur de chaleur air-caloporteur 40.

Selon ce mode de fonctionnement du circuit 20', le dispositif de stockage thermique 28 est rechargé en frigories fournies par la boucle 2. Ainsi, un deuxième trajet T2"' comprend la pompe 22, la vanne 24a, la ligne de contournement 24b, la vanne 28a, le dispositif de stockage thermique 28, la vanne 48, le deuxième échangeur de chaleur réfrigérant-caloporteur 32 et la vanne 50. A l'intérieur du deuxième échangeur de chaleur réfrigérant-caloporteur 32, les frigories du réfrigérant sont transférées au caloporteur, ce dernier les transportant ensuite vers le dispositif de stockage thermique 28.

En figure 3h est illustré un mode de fonctionnement lors des conditions estivales. Ce mode de fonctionnement est mis en oeuvre afin de faire fonctionner le premier 30 et le deuxième 32 échangeurs de chaleur réfrigérant-caloporteur en combinaison. Cette combinaison permet d'obtenir une amélioration du coefficient de performance de la boucle 2 en fonctionnement. On obtient ainsi le même effet qu'apporte un échangeur de chaleur interne dans lequel le réfrigérant circule dans un état de haute pression et haute température et dans un état de basse pression et basse température, un échange de chaleur s'effectuant entre ces deux états pour améliorer le coefficient de performance de la boucle 2. Ainsi, la présence des premier 30 et deuxième 32 échangeurs de chaleur réfrigérant-caloporteur, initialement prévues pour respectivement échanger des calories ou des frigories entre le réfrigérant et le caloporteur selon le mode de fonctionnement du système de gestion thermique 1, sont combinées pour améliorer le coefficient de performance de la boucle 2 sans nécessité d'ajouter un composant supplémentaire à la boucle 2, à savoir un échangeur de chaleur interne ou « IHX ».

Pour ce faire, la boucle 2 fonctionne selon un mode normal et le circuit 20' comprend un unique trajet T dans lequel le caloporteur circule selon son sens de circulation de la manière suivante : pompe additionnelle 44, la vanne 54, la vanne 48, le deuxième échangeur de chaleur réfrigérant-caloporteur 32, la vanne 32a, la vanne 50, la vanne 46, la vanne 30a et le premier échangeur de chaleur réfrigérant-caloporteur 30. Le réfrigérant passant à travers le deuxième échangeur de chaleur réfrigérant-caloporteur 32 est à basse température et basse pression, il transporte donc des frigories. Ces frigories sont échangées avec le caloporteur à l'intérieur du deuxième échangeur de chaleur réfrigérant-caloporteur 32. De même, le réfrigérant passant à travers le premier échangeur de chaleur réfrigérant-caloporteur 30 est à haute température et à haute pression, il transporte alors des calories qui sont échangées avec le caloporteur à l'intérieur du premier échangeur de chaleur réfrigérant-caloporteur 30.

En variante de tous les modes décrits dans la présente demande, le système de ventilation, chauffage et/ou climatisation S comprend un réchauffeur électrique 42 qui permet de chauffer le flux d'air principal F. L'action du réchauffeur électrique vient compléter celle du radiateur 38.

Tous les modes de réalisation et variantes du système de gestion thermique 1 décrit ci-dessus pour un véhicule électrique ou un véhicule hybride sont donc constitués de quatre unités qui interagissent via la circulation de réfrigérant et de caloporteur entre les différentes unités. Ils sont globalement constitués :
- de la boucle 2 qui permet de réaliser un cycle thermodynamique de chauffage ou de refroidissement actionné par un compresseur 4 électrique.
- du circuit 20 qui draine du froid ou de la chaleur entre différents composants de ce circuit.

Les quatre unités constitutives du système de gestion thermique 1 sont décrites ci-après, en terme de fonctionnalités et de composants.

Une unité de face avant 100 qui gère les échanges thermiques entre le système de gestion thermique 1 et le flux d'air extérieur. Elle possède quatre fonctions :
- lorsque la boucle 2 est désactivée (compresseur éteint) ou fonctionne en mode normal (évaporateur 14 refroidissant le flux d'air principal F), l'unité de face avant 100 évacue vers le flux d'air extérieur une partie de la chaleur drainée par le système de gestion thermique 1.
- lorsque la boucle 2 fonctionne en mode « pompe à chaleur », l'unité de face avant puise de la chaleur dans le flux d'air extérieur pour alimenter l'échangeur de chaleur extérieur 8
- dans certaines phases de fonctionnement en mode « pompe à chaleur », l'unité de face avant 100 peut simultanément évacuer de la chaleur vers le flux d'air extérieur via l'échangeur de chaleur air-caloporteur 40 et puiser de la chaleur dans le flux d'air extérieur via l'échangeur de chaleur extérieur 8. Dans cette situation, la présence de l'échangeur de chaleur air-caloporteur 40 à l'avant du véhicule permet de récupérer une partie de la chaleur qu'il évacue dans le flux d'air extérieur sur l'échangeur de chaleur extérieur 8 placé juste en aval selon le sens de circulation du flux d'air extérieur. Ceci permet également de dégivrer l'échangeur de chaleur extérieur 8.
- dans certains modes de fonctionnement particuliers, l'unité de face avant 100 permet de réduire les échanges thermiques entre le système de gestion thermique 1 et le flux d'air extérieur.

L'unité de face avant 100 comporte trois composants qui font partie du système de gestion thermique 1 :
- L'échangeur de chaleur air-caloporteur 40 dans lequel circule le caloporteur, qui échange avec le flux d'air extérieur. En option, l'échangeur de chaleur air-caloporteur 40 est complété par une vanne et une ligne de contournement pour réduire les échanges thermiques entre le caloporteur et le flux d'air extérieur dans certains modes de fonctionnement. Selon les modes de fonctionnement, le l'échangeur de chaleur air-caloporteur 40 sert à évacuer des calories prélevées par le système de gestion thermique 1 vers le flux d'air extérieur et à refroidir en conséquence le caloporteur, ou à puiser des calories dans le flux d'air extérieur pour réchauffer le caloporteur.
- L'échangeur de chaleur extérieur 8 dans lequel circule du réfrigérant, qui échange avec le flux d'air extérieur. Selon le mode de fonctionnement du L'système de gestion thermique 1, ce composant agit soit comme un condenseur (mode normal), soit comme un évaporateur (mode « pompe à chaleur »)
- Un dispositif d'obturation 60 de l'écoulement du flux d'air extérieur. Ce dispositif d'obturation 60 comprend des volets mobiles qui obturent l'échangeur de chaleur extérieur 8 et l'échangeur de chaleur air-caloporteur 40. Ce dispositif est activé dans certains modes de fonctionnement pour réduire les échanges thermiques entre le flux d'air extérieur et les échangeurs de la face avant. C'est en particulier le cas lorsqu'il est nécessaire de dégivrer l'échangeur de chaleur extérieur.

En variante, la disposition relative des composants, et en particulier le fait que l'échangeur de chaleur air-caloporteur 40 soit disposé devant ou derrière le l'échangeur de chaleur extérieur 8 constituent des variantes non déterminantes pour la présente invention.

Un système de ventilation, chauffage et/ou climatisation S qui gère les échanges thermiques entre le système de gestion thermique 1 et le flux d'air principal F soufflé dans l'habitacle afin d'assurer le confort thermique des occupants.

Il possède trois fonctions :
- refroidir le flux d'air principal F pour abaisser la température du flux d'air principal soufflé par rapport à la température extérieure
- réchauffer le flux d'air principal F pour augmenter la température du flux d'air soufflé par rapport à la température extérieure
- successivement refroidir et réchauffer le flux d'air principal F pour condenser une partie de l'humidité et contrôler le taux d'humidité de l'air soufflé. Cette dernière fonction peut être combinée avec du refroidissement ou réchauffement.

Le système de ventilation, chauffage et/ou climatisation S comporte trois composants qui font partie du système de gestion thermique 1 :
- l'évaporateur 14 dans lequel circule du réfrigérant, qui échange avec le flux d'air principal F soufflé dans l'habitacle. L'alimentation de l'évaporateur 14 est complétée par une vanne et une ligne de contournement, de manière à pouvoir interrompre son alimentation en réfrigérant dans certaines phases de fonctionnement du mode « pompe à chaleur ».
- Le radiateur 38 dans lequel circule du caloporteur, qui échange avec le flux d'air principal F soufflé. A titre de variante, le radiateur 38 est complété par une vanne et une ligne de contournement de manière à pouvoir interrompre son alimentation en caloporteur dans certaines phases de fonctionnement du mode normal. Ceci permet en particulier de réduire les échauffements parasites du flux d'air principal F soufflé en mode normal.

- En variante du radiateur 38, le système de ventilation, chauffage et/ou climatisation comprend un condenseur interne 39. Il est à noter que toutes les variantes décrites du deuxième mode (le circuit 20' comprenant deux pompes 22, 44) ci-dessus avec le radiateur peuvent être applicable avec un condenseur interne 39.
- un réchauffeur électrique 42, qui assure ou complète l'échauffement du flux d'air principal F soufflé selon la chaleur disponible sur le radiateur 38. Ce réchauffeur électrique 42 comprend des éléments résistifs.

Une variante du système de ventilation, chauffage et/ou climatisation S est de le décomposé en plusieurs sous modules, chacun disposant d'un ou plusieurs échangeurs assurant le refroidissement et réchauffage de l'air. Ces sous modules peuvent être alimentés en réfrigérant et caloporteur selon un réseau de conduites en série et / ou parallèle.

Une unité de gestion thermique d'auxiliaires 200 qui possède deux fonctions principales :
- contrôler la température des auxiliaires (batterie, système de propulsion ou de traction du véhicule...) en les alimentant par le circuit 20 à température et débit contrôlés. Selon les modes de fonctionnement, il s'agit de refroidir ou réchauffer chacun des auxiliaires, pendant le roulage ou lors d'une phase de préconditionnement à l'arrêt du véhicule.
- récupérer les calories perdues par ces auxiliaires pour les valoriser via une unité de génération de puissance 300 pour réchauffer l'habitacle. Cette valorisation s'effectue directement ou indirectement selon que les calories transitent directement vers le radiateur 38 ou sont utilisées comme source de chaleur de la boucle 2 en mode « pompe à chaleur » Dans des modes de fonctionnement transitoires, ces calories pourront être stockées pour partie dans le dispositif de stockage thermique 28.

L'unité de gestion thermique d'auxiliaires 200 comporte trois composants qui font partie du système de gestion thermique 1 :
- la pompe 22 qui met en circulation le caloporteur dans l'ensemble du circuit 20
- un réseau de conduites disposées en parallèle pour alimenter chacun des auxiliaires
- une vanne sur chaque conduite, ainsi qu'une ligne de contournement et une vanne supplémentaires, pour contrôler la répartition du débit de caloporteur dans chacune des conduites ainsi que le débit total de caloporteur circulant dans le système de gestion thermique 1.

Une variante est de réaliser un dédoublement du circuit en deux trajets indépendants qui disposent chacun d'une pompe et de liaisons spécifiques avec le sous-système de génération de puissance. Cette variante peut permettre d'alimenter simultanément les auxiliaires à des températures différentes. La solution de référence, constituée d'un circuit unique et d'une seule pompe, permet de réaliser la plupart des fonctions thermiques requises de manière séquentielle et simplifie notablement la complexité du réseau et sa gestion.

Une unité de génération de puissance thermique 300 qui gère la capacité du système de gestion thermique 1 à délivrer les besoins de puissance thermique (système de ventilation, chauffage et/ou climatisation S et auxiliaires) et les servitudes associées (unité de face avant 100) avec la meilleure efficacité énergétique possible, en régime stationnaire et transitoire.

Cette unité de génération de puissance thermique 300 assure trois fonctions principales complémentaires :
- générer par un cycle thermodynamique de la boucle 2 une puissance de refroidissement ou de chauffage supérieure à la puissance électrique du compresseur : la puissance de refroidissement est transmise au flux d'air principal F par l'évaporateur 14; la puissance de chauffage est transmise au caloporteur qui réchauffe ensuite le flux d'air principal F via le radiateur 38. La puissance de chauffage est complétée si besoin par le dispositif de chauffage électrique 34 sur le caloporteur.
- mutualiser les transferts de chaleur entre la boucle 2 et le circuit 20 pour maximiser la puissance disponible et optimiser l'efficacité énergétique du système. Cette mutualisation se traduit par cinq fonctions secondaires listées ci-dessous. En mode normal de fonctionnement de la boucle 2, la mutualisation permet d'améliorer la capacité de refroidissement du réfrigérant en aval du compresseur, en réalisant un premier étage de refroidissement sur le caloporteur, en amont de l'échangeur de chaleur extérieur 8 de la face avant et d'améliorer la capacité de refroidissement des auxiliaires, en pouvant refroidir le caloporteur avec du réfrigérant à basse température. En mode « pompe à chaleur » de la boucle 2, la mutualisation permet d'utiliser les calories récupérées sur les auxiliaires comme source d'énergie exploitable par la boucle 2 en mode « pompe à chaleur », d'apporter une puissance de chauffage utilisable à la fois pour les besoins du système de ventilation, chauffage et/ou climatisation S et des auxiliaires et quelque soit le mode de fonctionnement de la boucle 2 (normal ou « pompe à chaleur »), l'introduction d'un échange thermique entre le réfrigérant et le caloporteur, simultanément sur les portions BP (Basse Pression - Froide) et HP (Haute Pression - Chaude) de la boucle 2, permettant de modifier le cycle thermodynamique de manière analogue à l'introduction d'un échangeur additionnel de type « échangeur de chaleur interne» ou « IHX ». En conséquence, en complément ou indépendamment des fonctions citées précédemment, il peut être utilisé pour améliorer les performances énergétiques du cycle en modifiant les températures d'échange.
- disposer d'un stockage thermique qui permet de dissocier les phases de production de frigories ou de calories des phases d'utilisation de ces frigories ou de ces calories. Le stockage possède 2 fonctions complémentaires, à savoir stocker des calories ou frigories produites par le système de gestion thermique 1 lorsque le véhicule est à l'arrêt, branché sur une alimentation électrique extérieure, puis restituer ces calories ou frigories pour refroidir ou réchauffer le flux d'air principal dirigé vers l'habitacle et/ou les auxiliaires lors du roulage avec une consommation électrique réduite. Cette restitution peut s'effectuer directement, via le circuit 20, si le niveau de température est suffisant, ou indirectement, comme source (respectivement puits) d'un cycle thermodynamique en mode « pompe à chaleur » (respectivement mode normal), si le niveau de température est insuffisant (respectivement excessif) mais plus favorable que l'utilisation de la face avant et de du flux d'air extérieur comme source (respectivement puits) du cycle «pompe à chaleur». L'autre fonction complémentaire est de stocker temporairement, lors du roulage, un surplus de calories ou de frigories produites par le cycle thermodynamique de la boucle 2 lorsque le coefficient de performance de la boucle 2 (COP) est élevé et favorable, puis le restituer lorsque le coefficient de performance est faible ou défavorable, de manière à améliorer le coefficient de performance moyen du système de gestion thermique 1 sur l'ensemble du roulage. Cette fonctionnalité est particulièrement utile pour gérer les phases de dégivrage de la face avant. Lorsque l'échangeur de chaleur extérieur 8 doit être dégivré, il ne peut pas être utilisé pour puiser des calories à l'extérieur : pendant la phase de dégivrage, l'unité de génération de puissance 300 vient puiser temporairement dans le dispositif de stockage thermique 28; lorsque la phase de dégivrage est terminée, le système de gestion thermique 1 reconstitue le stockage thermique avec un excès de calories pour préparer la phase de dégivrage suivante. Globalement, une telle stratégie sera avantageuse en terme de coefficient de performance moyen du système de gestion thermique 1 sur l'ensemble du roulage comparée à une solution complètement stationnaire qui compenserait le déficit thermique lors du dégivrage par un chauffage purement électrique.

L'unité de génération de puissance 300 comprend au moins sept composants :
- le compresseur 4 électrique qui assure la mise en pression et température du réfrigérant pour réaliser un cycle thermodynamique de production de froid (mode normal) ou chaud (mode « pompe à chaleur ») de la boucle 2
- une bouteille 16 qui permet de gérer la charge en réfrigérant de la boucle 2, sécuriser l'alimentation en gaz du compresseur et assurer la filtration du réfrigérant
- deux vannes, doublées le cas échéant de vannes de by-pass, qui gèrent les zones de la boucle 2 qui travaillent à basse pression et basse température et à haute pression et haute température et agissent selon les modes de fonctionnement comme un dispositif de détente ou une vanne d'ouverture/fermeture
- une vanne 36 de by-pass de l'évaporateur 14, activable en mode « pompe à chaleur » si le flux d'air principal ne doit pas être refroidi alors que le cycle thermodynamique de la boucle 2 est activé.
- Un premier échangeur de chaleur réfrigérant-caloporteur 30 qui, selon les modes de fonctionnement, participe au refroidissement du réfrigérant (mode normal) ou assure le chauffage du caloporteur (mode « pompe à chaleur »)
- un deuxième échangeur de chaleur réfrigérant-caloporteur 32 qui, selon les modes de fonctionnement, valorise les calories drainées par le circuit 20 comme source de chaleur de la pompe à chaleur ou assure un refroidissement complémentaire du caloporteur pour refroidir les auxiliaires (mode normal)
- un dispositif de stockage thermique 28 qui, selon les modes de fonctionnement, permet de stocker ou restituer des calories ou frigories à différentes phases d'utilisation du système de gestion thermique 1
- des vannes et lignes by-pass sur le circuit 20, qui permettent le by-pass de chaque échangeur et du dispositif de stockage thermique 28 selon les modes de fonctionnement et besoins énergétiques

Un dispositif de chauffage électrique 34 qui permet d'apporter des calories au circuit 20 indépendamment de l'activation du cycle thermodynamique de la boucle 2. Ce dispositif de chauffage électrique 34 permet en particulier de mettre en température le dispositif de stockage thermique 28 à l'arrêt et assure un complément de chauffage du caloporteur dans certains modes de fonctionnement.

## Revendications

1. Système de gestion thermique (1) pour véhicule automobile comprenant une boucle (2) dans laquelle circule un fluide réfrigérant et comprenant un compresseur (4), un premier dispositif de détente (6), un échangeur de chaleur extérieur (8) et un évaporateur (14), un circuit (20) dans lequel circule un fluide caloporteur et comprenant au moins une pompe (22) et un premier échangeur de chaleur réfrigérant-caloporteur (30) relié à la boucle (2), le circuit (20) comprenant un deuxième échangeur de chaleur réfrigérant-caloporteur (32) relié à la boucle (2), **caractérisé en ce que** l'échangeur de chaleur extérieur (8), le premier dispositif de détente (6) et le premier échangeur de chaleur réfrigérant-caloporteur (30) sont connectés en série.

2. Système de gestion thermique (1) selon la revendication 1, dans lequel le circuit comprend un radiateur (38).

3. Système de gestion thermique (1) selon la revendication 1, dans lequel la boucle (2) comprend un condenseur interne (39).

4. Système de gestion thermique (1) selon l'une quelconque des revendications précédentes, dans lequel le premier échangeur de chaleur réfrigérant-caloporteur (30) est localisé en sortie du compresseur (4) et le deuxième échangeur de chaleur réfrigérant-caloporteur (32) est localisé en entrée du compresseur (4).

5. Système de gestion thermique (1) selon l'une quelconque des revendications précédentes, dans lequel le circuit (20) comprend au moins un auxiliaire (26).

6. Système de gestion thermique (1) selon la revendication 5, dans lequel l'auxiliaire (26) comprend une batterie, un système de propulsion ou traction, et/ou un dispositif électronique.

7. Système de gestion thermique (1) selon la revendication 5 ou 6, dans lequel l'auxiliaire (26) est localisé en sortie de la pompe (22).

8. Système de gestion thermique (1) selon l'une quelconque des revendications précédentes, dans lequel le circuit (20) comprend un échangeur de chaleur air-caloporteur (40).

9. Système de gestion thermique (1) selon l'une quelconque des revendications précédentes, dans lequel le circuit (20) comprend un dispositif de chauffage électrique (34).

10. Système de gestion thermique (1) selon l'une quelconque des revendications précédentes, dans lequel le circuit (20) comprend un dispositif de stockage thermique (28).

11. Système de gestion thermique (1) selon la revendication 10, dans lequel le premier (30) et le deuxième (32) échangeurs de chaleur réfrigérant-caloporteur sont disposés en série par rapport au dispositif de stockage thermique (28).

12. Système de gestion thermique (1) selon la revendication 11, dans lequel le dispositif de stockage thermique (28) est localisé en entrée du premier échangeur de chaleur réfrigérant-caloporteur (30).

13. Système de gestion thermique (1) selon la revendication 10, dans lequel le premier (30) et le deuxième (32) échangeurs de chaleur réfrigérant-caloporteur sont disposés en parallèle par rapport au dispositif de stockage thermique (28).

14. Système de gestion thermique (1) selon l'une quelconque des revendications précédentes, dans lequel le circuit (20) comprend une pompe additionnelle (44).

## Patentansprüche

1. Wärmemanagementsystem (1) für ein Kraftfahrzeug, das eine Schleife (2) enthält, in der ein Kühlmittel fließt und die einen Kompressor (4), eine erste Entspannungsvorrichtung (6), einen äußeren Wärmetauscher (8) und einen Verdampfer (14) enthält, und einen Kreislauf (20) enthält, in dem ein Wärmeträgerfluid fließt und der mindestens eine Pumpe (22) und einen ersten mit der Schleife (2) verbundenen Kühlmittel-Wärmeträger-Wärmetauscher (30) enthält, wobei der Kreislauf (20) einen zweiten mit der Schleife (2) verbundenen Kühlmittel-Wärmeträger-Wärmetauscher (32) enthält, **dadurch gekennzeichnet, dass** der äußere Wärmetauscher (8), die erste Entspannungsvorrichtung (6) und der erste Kühlmittel-Wärmeträger-Wärmetauscher (30) in Reihe geschaltet sind.

2. Wärmemanagementsystem (1) nach Anspruch 1, wobei der Kreislauf einen Kühler (38) enthält.

3. Wärmemanagementsystem (1) nach Anspruch 1, wobei die Schleife (2) einen inneren Kondensator (39) enthält.

4. Wärmemanagementsystem (1) nach einem der vorhergehenden Ansprüche, wobei der erste Kühlmittel-Wärmeträger-Wärmetauscher (30) am Ausgang des Kompressors (4) und der zweite Kühlmittel-Wärmeträger-Wärmetauscher (32) am Eingang des Kompressors (4) angeordnet ist.

5. Wärmemanagementsystem (1) nach einem der vorhergehenden Ansprüche, wobei der Kreislauf (20) mindestens ein Hilfsaggregat (26) enthält.

6. Wärmemanagementsystem (1) nach Anspruch 5, wobei das Hilfsaggregat (26) eine Batterie, ein Antriebs- oder Zugsystem und/oder eine elektronische Vorrichtung enthält.

7. Wärmemanagementsystem (1) nach Anspruch 5 oder 6, wobei das Hilfsaggregat (26) am Ausgang der Pumpe (22) angeordnet ist.

8. Wärmemanagementsystem (1) nach einem der vorhergehenden Ansprüche, wobei der Kreislauf (20) einen Luft-Wärmeträger-Wärmetauscher (40) enthält.

9. Wärmemanagementsystem (1) nach einem der vorhergehenden Ansprüche, wobei der Kreislauf (20) eine elektrische Heizvorrichtung (34) enthält.

10. Wärmemanagementsystem (1) nach einem der vorhergehenden Ansprüche, wobei der Kreislauf (20) eine Wärmespeichervorrichtung (28) enthält.

11. Wärmemanagementsystem (1) nach Anspruch 10, wobei der erste (30) und der zweite (32) Kühlmittel-Wärmeträger-Wärmetauscher bezüglich der Wärmespeichervorrichtung (28) in Reihe geschaltet sind.

12. Wärmemanagementsystem (1) nach Anspruch 11, wobei die Wärmespeichervorrichtung (28) am Eingang des ersten Kühlmittel-Wärmeträger-Wärmetauschers (30) angeordnet ist.

13. Wärmemanagementsystem (1) nach Anspruch 10, wobei der erste (30) und der zweite (32) Kühlmittel-Wärmeträger-Wärmetauscher bezüglich der Wärmespeichervorrichtung (28) parallel geschaltet sind.

14. Wärmemanagementsystem (1) nach einem der vorhergehenden Ansprüche, wobei der Kreislauf (20) eine zusätzliche Pumpe (44) enthält.

## Claims

1. Thermal management system (1) for a motor vehicle comprising a loop (2) through which there circulates a coolant and which comprises a compressor (4), a first expansion device (6), an external heat exchanger (8) and an evaporator (14), a circuit (20) through which there circulates a heat-transfer fluid and which comprises at least one pump (22) and a first coolant/heat-transfer fluid heat exchanger (30) connected to the loop (2), the circuit (20) comprising a second coolant/heat-transfer fluid heat exchanger (32) connected to the loop (2), **characterized in that** the external heat exchanger (8), the first expansion device (6) and the first coolant/heat-transfer fluid heat exchanger (30) are connected in series.

2. Thermal management system (1) according to Claim 1, in which the circuit comprises a radiator (38).

3. Thermal management system (1) according to Claim 1, in which the loop (2) comprises an internal condenser (39).

4. Thermal management system (1) according to any one of the preceding claims, in which the first coolant/heat-transfer fluid heat exchanger (30) is located at the outlet of the compressor (4), and the second coolant/heat-transfer fluid heat exchanger (32) is located at the inlet to the compressor (4).

5. Thermal management system (1) according to any one of the preceding claims, in which the circuit (20) comprises at least one auxiliary (26).

6. Thermal management system (1) according to Claim 5, in which the auxiliary (26) comprises a battery, a propulsion or traction system, and/or an electronic device.

7. Thermal management system (1) according to Claim 5 or 6, in which the auxiliary (26) is located at the outlet of the pump (22).

8. Thermal management system (1) according to any one of the preceding claims, in which the circuit (20) comprises an air/heat-transfer fluid heat exchanger (40).

9. Thermal management system (1) according to any one of the preceding claims, in which the circuit (20) comprises an electric heating device (34).

10. Thermal management system (1) according to any one of the preceding claims, in which the circuit (20) comprises a thermal storage device (28).

11. Thermal management system (1) according to Claim 10, in which the first (30) and the second (32) coolant/heat-transfer fluid heat exchangers are arranged in series with respect to the thermal storage device (28).

12. Thermal management system (1) according to Claim 11, in which the thermal storage device (28) is located at the inlet to the first coolant/heat-transfer fluid heat exchanger (30).

13. Thermal management system (1) according to Claim 10, in which the first (30) and the second (32) coolant/heat-transfer fluid heat exchangers are arranged in parallel with respect to the thermal storage device (28).

14. Thermal management system (1) according to any one of the preceding claims, in which the circuit (20) comprises an additional pump (44).
